Europäisches Patentamt

European Patent Office

Office européen des brevets

(11) Publication number: **0 173 445 B1**

# EUROPEAN PATENT SPECIFICATION

(45) Date of publication of patent specification: 20.03.91    (51) Int. Cl.⁵: **H02M 7/5387**

(21) Application number: 85305201.7

(22) Date of filing: 22.07.85

(54) Power control circuit.

(30) Priority: 30.07.84 GB 8419373

(43) Date of publication of application:
05.03.86 Bulletin 86/10

(45) Publication of the grant of the patent:
20.03.91 Bulletin 91/12

(84) Designated Contracting States:
CH DE FR IT LI NL SE

(56) References cited:
FR-A- 2 264 421
FR-A- 2 486 329
US-A- 4 099 109

IEEE TRANSACTIONS ON INDUSTRY APPLI-
CATIONS, vol. IA-19, no. 2, March/April 1983,
pages 254-267, New York, US; R.L. STEIGER-
WALD et al.: "Application of power transis-
tors to residential and intermediate rating
photovoltaic array power conditioners"

(73) Proprietor: WESTINGHOUSE BRAKE AND SIG-
NAL HOLDINGS LIMITED
Pew Hill
Chippenham Wiltshire(GB)

(72) Inventor: Cowen, David William
24 Wastfield
Corsham Wiltshire(GB)

(74) Representative: Bird, Vivian John et al
PAGE & CO. Temple Gate House
Temple Gate Bristol, BS1 6PL(GB)

EP 0 173 445 B1

## Description

The present invention relates to a railway jointless track circuit transmitter and, in particular, to such a transmitter which operates to tend to maintain a power output at a substantially constant level independently of supply voltage variations.

As prior art there may be mentioned FR-A-2 486 329 which discloses a circuit for stabilising a high voltage traction supply using a bridge of controllable switching devices, a voltage supply connected to input terminals of the bridge, an output circuit connected to output terminals of the bridge and pulse width modulated control means for providing control signals for the switching devices whose widths are determined according to the voltage supply, the output power being maintained at a constant level.

A railway jointless track circuit transmitter according to the present invention is particularly useful where it is desired to transmit to a track circuit a carrier signal at a substantially constant power level regardless of supply voltage variations. The transmitter in this case is also required to possess fail-safe characteristics so that is shall not be possible, in the event of any failure, to inject into the output a signal having a power greater than a predetermined level.

According to the present invention there is provided a railway jointless track circuit transmitter comprising:-

a) generating means for generating first and second modulated signals each comprising a carrier signal of a predetermined frequency modulated by a modulation signal;

b) a bridge of first, second, third and fourth controllable switching devices, the first and third devices being diagonally opposite devices in the bridge and the second and fourth devices being diagonally opposite devices in the bridge;

c) a voltage supply connected to input terminals of the bridge;

d) an output transformer connected between output terminals of the bridge for supplying an output signal to a track circuit;

e) first pulse width modulated control means connected to receive said first modulated signal, the first control means providing first and second pulse width modulated control signals using said first modulated signal, the pulse widths of which control signals are determined in accordance with the voltage supply level, control terminals for the first and third switching devices being connected to receive the first and second control signals respectively and the arrangement being such that the first and third switching devices are rendered conductive at the same time for first periods;

f) second pulse width modulated control means connected to receive said second modulated signal, the second control means providing third and fourth pulse width modulated control signals using said second modulated signal, the pulse widths of which control signals are determined in accordance with the voltage supply level, control terminals for the second and fourth switching devices being connected to receive the third and fourth control signals respectively and the arrangement being such that the second and fourth switching devices are rendered conductive at the same time for second periods, out of phase with respect to the first periods, said first, second, third and fourth control signals tending to maintain the output power of said output signal at a substantially constant level; and

g) means for isolating said voltage supply from said input terminals in response to the first and fourth switching devices being conductive at the same time or the second and third switching devices being conductive at the same time.

The present invention will now be described, by way of example only, with reference to the accompanying drawings, in which:

Fig. 1 is a schematic of the circuitry of a jointless track circuit transmitter;

Fig. 2 shows a bridge of Fig. 1 in more detail;

Fig. 3 is a schematic diagram of a power control unit of Fig. 1;

Fig. 4 is a schematic diagram of a coded signal generator for the transmitter of Fig. 1; and

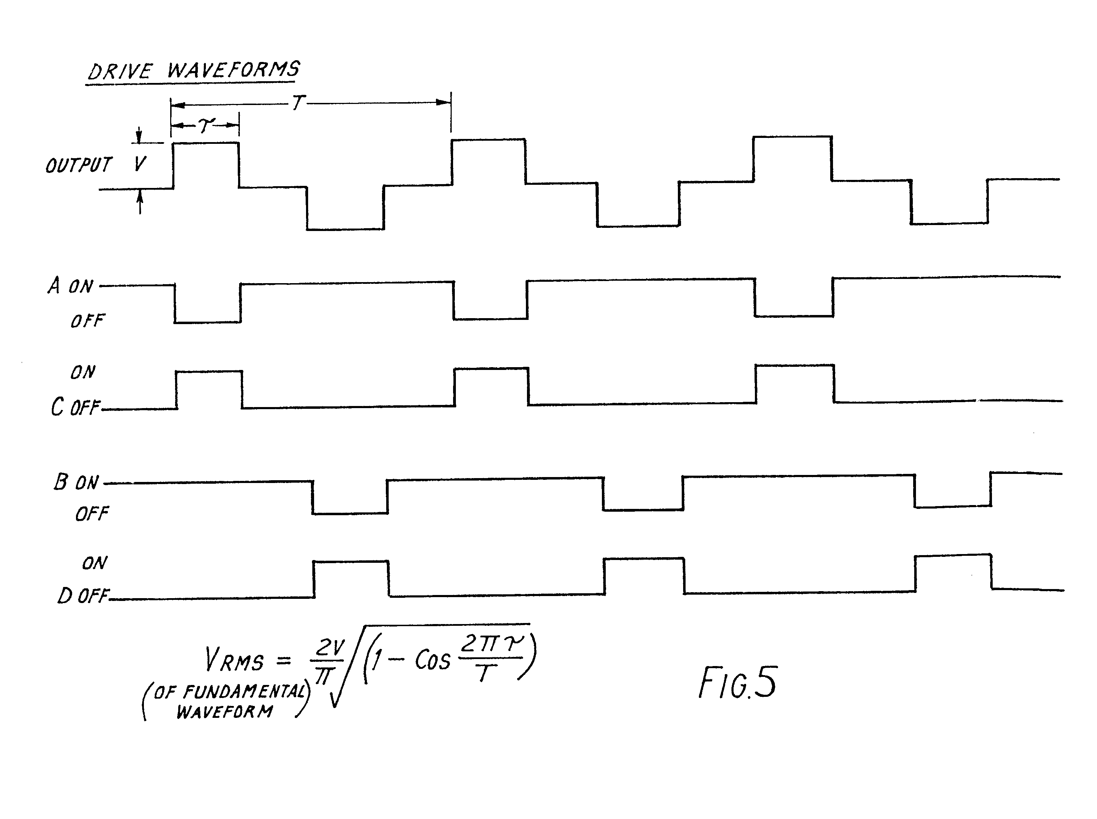

Fig. 5 is a wave form diagram for illustrating the operation of the circuitry of Fig. 1.

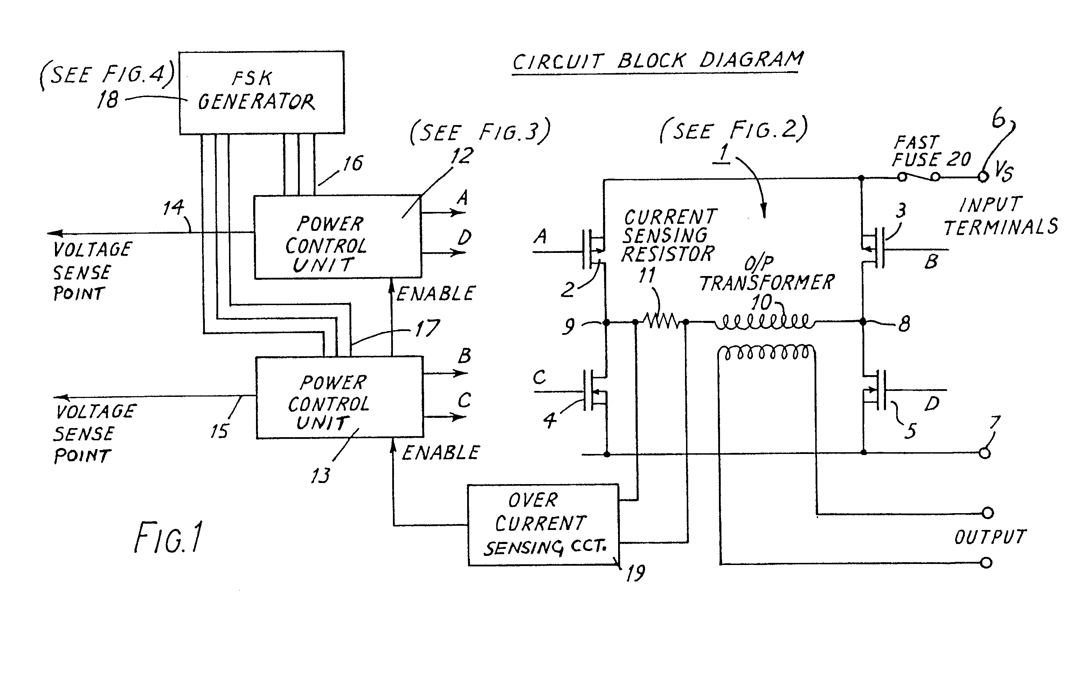

Referring now to the railway jointless track circuit transmitter shown in Fig. 1, there is shown at 1 a bridge of controllable switching devices 2, 3, 4 and 5 comprising four field-effect transistors, of suitable current capacity, connected in a conventional bridge layout in which a voltage supply source is connected between input terminals 6 and 7 and the output is taken between output terminals 8 and 9 via an output transformer 10 connected between terminals 8 and 9. Also, in series with the primary winding of transformer 10 there is connected a current sensing resistor 11 and in parallel therewith an overcurrent sensing circuit 19 to which further reference will be made below.

The control gates of the switching devices 2, 3, 4 and 5 are connected so that the devices of each pair of diagonally opposite devices in the bridge are operated by respective control signals from a common one

2

of power control units 12 and 13. The power control units 12 and 13 are connected respectively according to the notation shown in Fig. 1. The circuits contained within the control units 12 and 13 are identical and each is responsive to two inputs namely a first input 14 or 15 (which is a sensed voltage level derived from the voltage supply connected to bridge input terminals 6 and 7) and a second input 16 or 17 (which operates switching controls in accordance with the desired alternating frequency characteristics required in the final power output appearing across the terminals of the secondary winding of output transformer 10). The inputs 16 and 17 are derived from a further block 18 comprising, in the present example, a frequency shift keyed generator.

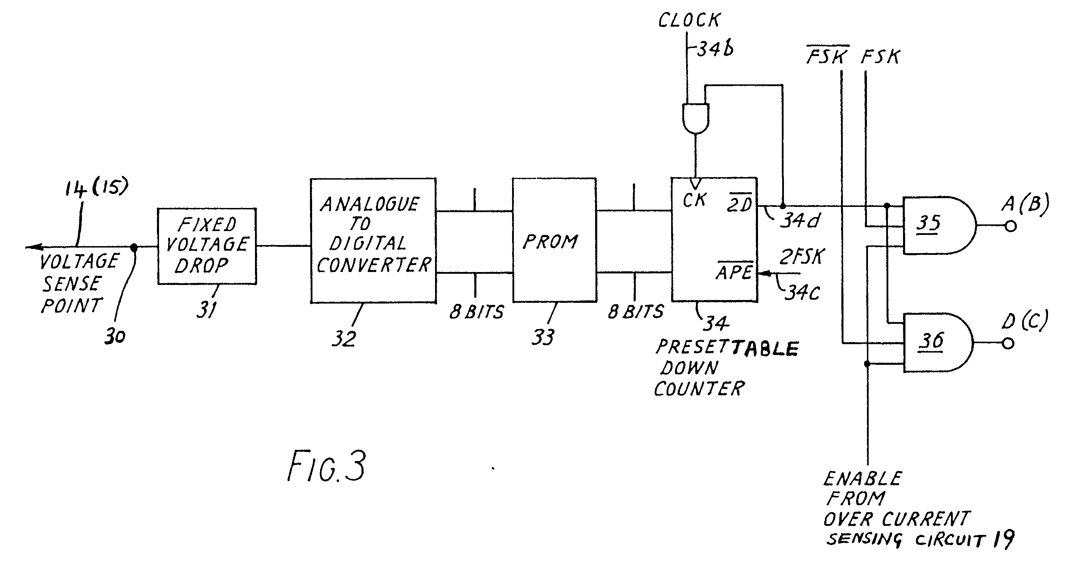

The circuit 19 connected in parallel with the current sensing resistor 11 is responsive to the potential difference developed across the resistor 11 by an output current, and the circuit 19 provides alternatively an enable or inhibit output which is connected to provide a third input to the control units 12 and 13, in a manner to be described in further detail with reference to Fig. 3.

There is also connected in series with the input terminal 6 of the bridge 1, a fast acting, current sensitive fuse element, or circuit breaker, 20, the purpose of which will also be described in further detail below.

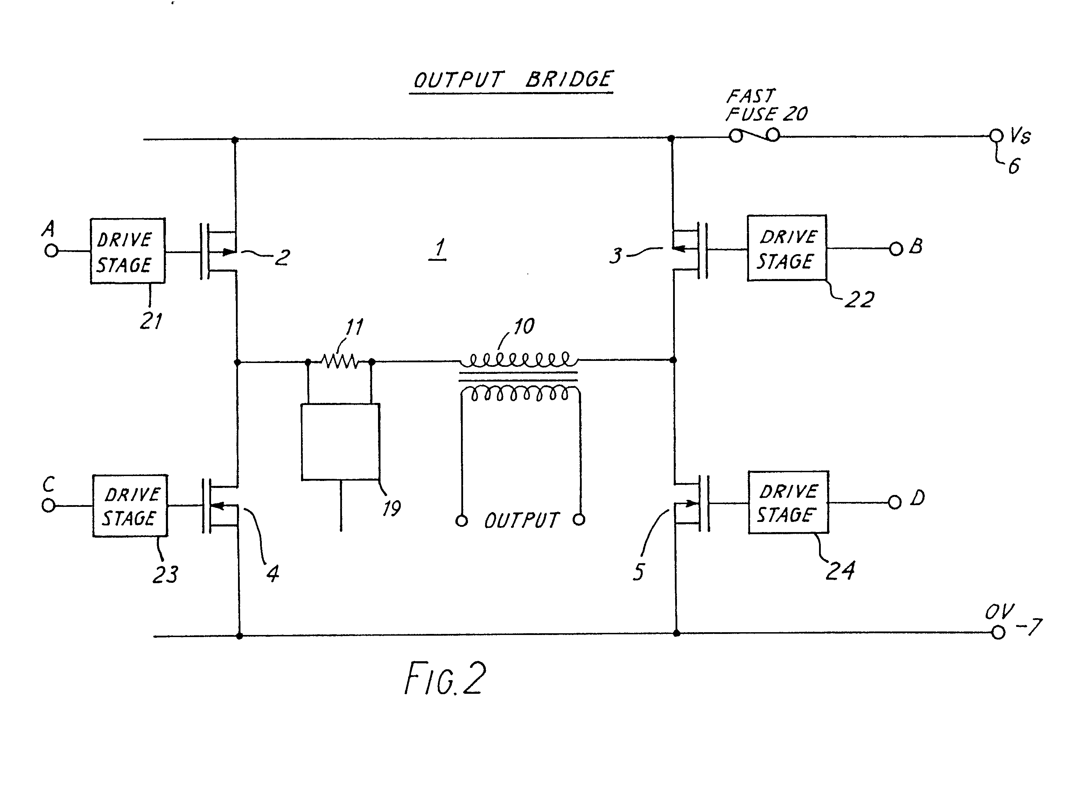

Referring now to Fig. 2, there is shown an enlarged circuit diagram of the bridge 1. The control signals for the switching devices 2, 3, 4 and 5 are supplied from respective control terminals labelled A, B, C and D and via drive stage circuits 21, 22, 23 and 24 respectively to the control gates of the switching devices 2, 3, 4 and 5 respectively. The switching devices 2 and 5, which form one diagonal pair of devices, are operated by control signals from the first control unit 12. The other diagonal pair of switching devices (3 and 4) are operated by control signals from the second control unit 13. The control signals are such that devices 2 and 5 are conductive at the same time for first periods and the devices 3 and 4 are conductive at the same time for second periods, which are out of phase with the first periods.

The circuitry for one form of power control unit, suitable for each of units 12 and 13, is illustrated in Fig. 3. Other forms of circuit design are suitable. The one presently being described employs digital techniques and was selected, inter alia, for the ease with which the operating frequencies can be altered.

In the circuitry of Fig. 3, a first, voltage sensing terminal 30 is provided, which is connected externally to a supply voltage sensing point. The input terminal 30 is connected via a fixed voltage drop or threshold circuit 31 to the input of an analogue to digital converter 32. In practice, the supply voltage varies within a voltage output range between limits of, say, 20 and 30 volts, and the minimum voltage which the pulse width modulated circuit can compensate is approximately 18 volts. Therefore, the fixed voltage drop circuit 31 introduces an 18 volt threshold to the input, effectively shifting the range of voltage variation to commence at about zero volts and thereby utilising the analogue to digital converter 32 to the fullest extent possible.

The converter 32 generates an 8 bit digital representation of a sensed voltage as a parallel output word which is connected to the address input of a programmable read only memory (PROM) 33 which contains a look-up table of digital words or numbers representing the pulse widths indexed against each of the 8 bit words representing a sensed voltage within the operating range. The output from the PROM 33 represents the required pulse width by means of an 8 bit digital number. The represented pulse width is compensated for the sinusoidal current wave-form of the output in accordance with the formula:

$$V_{RMS} = \frac{2V}{\pi} \sqrt{(1 - \cos \frac{2\pi\tau}{T})}$$

$$\tau = \text{pulse width}$$

$$T = \text{period of signal waveform, and}$$

$$V = \text{waveform amplitude}$$

The PROM output is used as the parallel preset input 34a to a presettable down counter 34. This counter 34 is also provided with a clock input 34b which determines the count down rate and a third input 34c which controls the reloading of the 8 bit number at input 34a to reset the counter. The final output 34d of the counter comprises a latched output which changes state at the beginning and end of a count period, the counter occupying a first state normally and a second state during the period in which the preset number is being counted downs.

The counter output 34d is connected to one input of each of two 3-input AND gates 35 and 36, a second input of each of these gates also being connected to a common latched signal line connected to the enable or inhibit output of the overcurrent sensing circuit 19 in Fig. 1. The remaining, third input of gate 35

3

is connected to a frequency signal and the corresponding third input of gate 36 is connected to an inverse of that signal. The respective outputs of the gates 35, 36, in Fig. 3 identified as A and D respectively, provide the control signals for the switching devices 2 and 5 of the bridge 1, see Figs. 1 and 2.

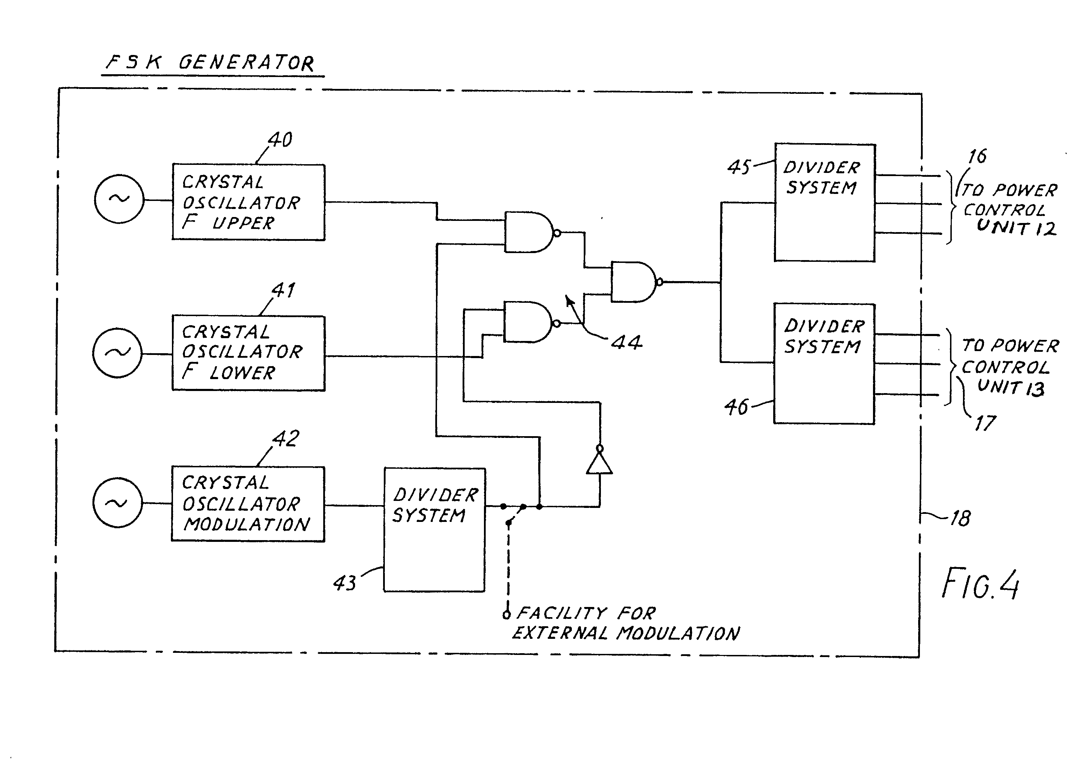

In the particular example being described, the final output signal is a frequency shift keyed (FSK) power signal and this is generated as a result of the circuit illustrated in Fig. 4. An FSK signal comprises a signal which is switched between alternate frequencies at a modulation rate. In the arrangement of Fig. 4, the keyed frequencies are generated by crystal oscillators 40 and 41 which produce upper and lower frequency signals respectively. The modulation frequency is generated by a third oscillator 42 and a frequency divider 43. The frequency keying at the modulation rate is controlled by a logic gating arrangement generally indicated at 44 and which is of well known configuration. Basically, because it is more convenient to do so, due to the high frequencies of the crystal oscillators 40, 41 and 42, the frequency keyed signal produced by the gates 44 is also at a relatively high frequency and is further divided to a lower rate by dividers 45 and 46, the outputs of which are connected to the power control units 12 and 13 (see Fig. 1) respectively. The outputs of these dividers provide the clock signal at input 34b of Fig. 3, the FSK signals to gates 35 and 36, and the load signal to input 34c.

In operation of the illustrated embodiment, in a railway jointless track circuit transmitter, the frequency shift keyed signal is characteristic of the transmitter. A track circuit may have one of five alternative nominal carrier frequencies, for example, 4080 Hz, 4560 Hz, 5040 Hz, 5520 Hz and 6000 Hz and the upper and lower keyed frequencies are shifted from these nominal frequencies by 40 Hz. In addition, each track circuit has a characteristic modulation frequency which may be a constant frequency, or a coded modulation signal, or even an externally variable modulation signal. The corresponding FSK signal is generated by the block 18 in Fig. 1, shown in greater detail in Fig. 4. These signals connected to the power control units 12 and 13 in Fig. 1 cause the switching devices 2, 3, 4 and 5 of the bridge 1 to be operated in order to switch current between the terminals 8 and 9 of the bridge and through the primary winding of transformer 10 to supply the power output through inductive coupling with the secondary of the transformer. This current is derived from the voltage supply connected across terminals 6 and 7, which voltage, although normally reasonably stable, may lie within and vary between voltage limits of 20 and 30 volts. It is preferred not to employ a fully stabilised voltage supply because the stabilising electronics of such supplies do not permit of fail-safe characteristics so that some failure modes may result in the production of excessive current and/or voltage. An increase in supply voltage to a transmitter, without the power control of the embodiment of the present invention, would boost the transmitter output, which is a "wrong side" failure. Therefore, even a stabilised power supply would have to fail safe in the event of a failure occuring the result of which is a supply voltage increase. The embodiment of the present invention is preferred and it permits the transmitter to be operated from batteries which can not provide a stabilised voltage.

The variations of the power supply voltage are compensated by variation of the pulse widths of the switching periods of the switching devices 2, 3, 4 and 5 to tend to maintain a constant output power, that is a constant voltage and current product in the transformer primary winding arm of the bridge. The instantaneous supply voltage value is sensed by both units 12 and 13 in Fig. 1, one of which is shown in more detail in Fig. 3, and is transformed by the analogue to digital converter 32 and the PROM 33 look-up table to a corresponding pulse width on counter output 34d. The result is that the switching control signals at terminals A and D are produced to switch the devices 2 and 5 into a state of conduction for first pulse widths determined in accordance with the given formula. Similarly, the switching control signals at terminals B and C are produced to switch the devices 1 and 3 into a state of conduction for out of phase second pulse widths determined in accordance with the

In the event of a failure of the pulse width control system, the power can only increase up to the limit at which the first and second pulse widths overlap (so that both devices 2 and 4 or both devices 3 and 5 are conductive together) since at that point devices 2 and 4 or devices 3 and 5 will short-circuit the voltage supply and the total current drawn from the voltage supply will exceed the current sensitive rating of the fuse 20 which will then burn out.

The overcurrent sensing circuit 19 operates in response to a voltage, in excess of a predetermined threshold, developed across the resistor 11 to provide either an enable or inhibit logic output connected to the gates 35 and 36 in the power control units 12 and 13, see Fig. 3. It provides protection against the effects of some faults and, for example, installation errors and effectively protects the fuse 20 from the effects of such faults. Consequently the fuse is rendered responsive only to failures in the power control system itself.

**Claims**

1. A railway jointless track circuit transmitter comprising:-

   a) generating means (18) for generating first and second modulated signals each comprising a carrier signal of a predetermined frequency modulated by a modulation signal;

   b) a bridge (1) of first, second, third and fourth controllable switching devices (2, 3, 5, 4), the first and third devices being diagonally opposite devices in the bridge and the second and fourth devices being diagonally opposite devices in the bridge;

   c) a voltage supply connected to input terminals (6, 7) of the bridge;

   d) an output transformer (10) connected between output terminals (8, 9) of the bridge for supplying an output signal to a track circuit;

   e) first pulse width modulated control means (12) connected to receive said first modulated signal, the first control means providing first and second pulse width modulated control signals using said first modulated signal, the pulse widths of which control signals are determined in accordance with the voltage supply level, control terminals (A, D) for the first and third switching devices (2, 5) being connected to receive the first and second control signals respectively and the arrangement being such that the first and third switching devices are rendered conductive at the same time for first periods;

   f) second pulse width modulated control means (13) connected to receive said second modulated signal, the second control means providing third and fourth pulse width modulated control signals using said second modulated signal, the pulse widths of which control signals are determined in accordance with the voltage supply level, control terminals (B, C) for the second and fourth switching devices (3, 4) being connected to receive the third and fourth control signals respectively and the arrangement being such that the second and fourth switching devices are rendered conductive at the same time for second periods, out of phase with respect to the first periods, said first, second, third and fourth control signals tending to maintain the output power of said output signal at a substantially constant level; and

   g) means (20) for isolating said voltage supply from said input terminals in response to the first and fourth switching devices being conductive at the same time or the second and third switching devices being conductive at the same time.

2. A transmitter according to claim 1, wherein said isolating means (20) comprises a fuse.

3. A transmitter according to claim 1 or 2, wherein each of said first and second pulse width modulated control means (12 or 13) includes means (32) responsive to a sensed voltage level of the supply for determining the pulse widths of its control signals.

4. A transmitter according to claim 3, wherein said responsive means (32) comprises an analogue to digital converter.

5. A transmitter according to claim 4, wherein each of said first and second pulse width modulated control means (12 or 13) includes a voltage threshold circuit (31) arranged to provide a zero reference level for the analogue to digital converter (32) at a level slightly less than the lower limit of the supply voltage range.

6. A transmitter according to claim 4 or 5, wherein in each of said first and second pulse width modulated control means (12 or 13) an output of the analogue to digital converter (32) is connected for controlling pulse width timing means (33) in accordance with a digital representation of a sensed voltage supply level.

7. A transmitter according to claim 6, wherein in each of said first and second pulse width modulated control means (12 or 13) the pulse width timing means (33) includes conversion means for converting a digital representation of a sensed voltage supply level to a representation of pulse width calculated according to a predetermined relationship.

8. A transmitter according to claim 7, wherein in each of said pulse width modulated control means (12 or 13) the conversion means (33) includes a look-up table comprising digital words or numbers representing pulse widths indexed against digital words representing corresponding sensed voltage levels.

9. A transmitter according to claim 8, wherein each of said pulse width modulated control means (12 or 13) includes a counter (34) arranged to count down the digital number representing pulse width to determine the pulse width of its control signals.

**Revendications**

1. Emetteur de circuit de voie ferroviaire sans joint caractérisé en ce qu'il comprend :

   a) des moyens (18) pour générer des premier et second signaux modulés, chacun comprenant un signal porteur de fréquence prédéterminèe modulée par un signal de modulation,

   b) un pont (1) composé des premier, second, troisième et quatrième éléments de commutation contrôlables (2,3,4,5), le premier et troisième éléments étant disposés vis-à-vis sur une diagonale du pont et les second et quatrième éléments étant disposés vis à vis sur l'autre diagonale du pont,

   c) une alimentation en tension branchée aux bornes d'entrée (6,7) du pont,

   d) un tranformateur de sortie (10) branché aux bornes de sortie (8,9) du pont pour délivrer un signal de sortie au circuit de voie,

   e) des premiers moyens (12) de contrôle à modulation par la largeur d'impulsion branchés de telle façon qu'ils reçoivent le premier signal modulé, le premier moyen de contrôle délivrant des premier et second signaux de contrôle modulé par la largeur d'impulsion selon ce premier signal modulé, la largeur d'impulsion de ce signal de contrôle étant déterminée par rapport au niveau de la tension d'alimentation, les bornes de contrôle (A,D) des premier et troisième éléments de commutation (2,5) étant reliées de telle sorte qu'elles reçoivent les premier et second signaux de contrôle respectivement, et la conception étant telle que les premier et troisième éléments de commutation soient rendus conducteurs simultanément pour la première période,

   f) les seconds moyens (13) de contrôle à modulation par la largeur d'impulsion branchés de telle sorte qu'ils recoivent le second signal modulé, ces seconds moyens de contrôle délivrant des troisième et quatrième signaux de contrôle modulé par la largeur de l'impulsion selon le second signal modulé, la largeur d'impulsion de ces signaux de contrôle étant déterminée par rapport au niveau de la tension d'alimentation, les bornes de contrôle (B,C) des second et quatrième éléments de commutation (3,4) étant reliées de telle sorte à recevoir les troisième et quatrième signaux de contrôle respectivement, la conception étant telle que les second et quatrième éléments de commutation soient rendus conducteurs au même moment pour la seconde période déphasée par rapport à la première période, ces premier, second, troisième et quatrième signaux de contrôle tendant à maintenir la puissance de sortie du signal de sortie à un niveau substantiellement constant, et

   g) des moyens (20) pour isoler l'alimentation en tension des bornes d'entrée si les premier et quatrième éléments de commutation sont conducteurs simultanément ou si les second et troisième éléments de commutation sont conducteurs simultanément.

2. Emetteur selon la revendication 1, caractérisé en ce que les moyens d'isolation (20) comprennent un fusible.

3. Emetteur selon la revendication 1 ou 2, caractérisé en ce que chacun des premier et second moyens (12 ou 13) de contrôle à modulation de largeur d'impulsion incluent des moyens (32) sensibles à un niveau de tension mesuré de l'alimentation pour déterminer la largeur d'impulsion de ces signaux de contrôle.

4. Emetteur selon la revendication 3, caractérisé en ce que les moyens de réponse (32) comprennent un convertisseur analogique/digital.

5. Emetteur selon la revendication 4, caractérisé en ce que chacun des premier et second moyens (12 ou 13) de contrôle à modulation de la largeur d'impulsion comprennent un circuit de seuil de tension (31) disposé pour fournir un niveau de référence zéro pour le convertisseur analogique/digital (32) à un niveau légèrement moindre que la limite inférieure de la plage de la tension d'alimentation.

6. Emetteur selon la revendication 4 ou 5, caractérisé en ce que, dans chacun des premier et second moyens (12 ou 13) de contrôle à modulation par la largeur d'impulsion, l'une des sorties du convertisseur analogique/digital (32) est reliée pour contrôler les moyens temporisant la largeur

6

d'impulsion (33) selon une représentation digitale du niveau de tension d'alimentation mesuré.

7. Emetteur selon la revendication 6, caractérisé en ce que, dans chacun des premier et second moyens (12 ou 13) de contrôle à modulation par la largeur d'impulsion, les moyens temporisant la largeur d'impulsion (33) comprennent des moyens de conversion pour convertir une représentation digitale du niveau de tension d'alimentation mesuré en une représentation de largeur d'impulsion calculée selon une relation prédéterminée.

8. Emetteur selon la revensication 7, carractérisé en ce que, dans les moyens (12 ou 13) de contrôle à modulation de largeur d'impulsion, les moyens de conversion (33) comprennent une table de conversion comprenant des mots ou nombres digitaux représentant la largeur d'impulsion indexée contre des mots digitaux représentant le niveau de tension mesuré correspondant.

9. Emetteur selon la revendication 8, caractérisé en ce que chacun des moyens (12 ou 13) de contrôle à modulation par la largeur d'impulsion comprennent un compteur (34) branché de telle sorte à décrémenter le nombre digital représentant la largeur d'impulsion pour déterminer la largeur d'impulsion de son signal de contrôle.


## Ansprüche

1. Eisenbahn-Endlosschienen-Stromkreis-Senderschaltung, aufweisend
   a) eine Generatoreinrichtung (18) zur Erzeugung eines ersten und eines zweiten modulierten Signales, die jeweils ein Trägersignal einer vorbestimmten Frequenz aufweisen, das durch ein Modulationssignal moduliert ist;
   b) eine Brücke (1) einer ersten, zweiten, dritten und vierten steuerbaren Schalteinrichtung (2,3,5,4), wobei die erste und dritte Einrichtung sich in der Brücke diagonal gegenüberliegen und die zweite und die vierte Einrichtung sich in der Brücke diagonal gegenüberliegen;
   c) eine Spannungseinspeisung, die mit den Eingangsanschlüssen (6,7) der Brücke verbunden ist;
   d) einen Ausgangswandler (10), welcher an die Ausgangsanschlüsse (8, 9) der Brücke zwecks Lieferung eines Ausgangssignals an einen Schienenstromkreis angeschlossen ist;
   e) eine erste pulslängenmodulierte Steuereinrichtung (12), die so geschaltet ist, um das erste modulierte Signal zu empfangen, wobei die erste Steuereinrichtung ein erstes und ein zweites pulslängenmoduliertes Steuersignal unter Verwendung des ersten modulierten Signals erzeugt, wobei die Pulslängen der Steuersignale in Übereinstimmung mit der Höhe der Speisespannung festgelegt werden, Steueranschlüsse (A, D) für die erste und die dritte Schalteinrichtung (2, 5) so geschaltet sind, um das erste bzw. das zweite Steuersignal zu empfangen, und wobei die Anordnung so getroffen ist, daß die erste und die dritte Schalteinrichtung zur gleichen Zeit während erster Perioden leitend gemacht werden;
   f) eine zweite pulslängenmodulierte Steuereinrichtung (13), die so geschaltet ist, um das zweite modulierte Signal zu empfangen, wobei die zweite Steuereinrichtung ein drittes und ein viertes pulslängenmoduliertes Steuersignal unter Verwendung des zweiten modulierten Signals erzeugt, wobei die Pulslängen der Steuersignale in Übereinstimmung mit der Höhe der Speisespannung festgelegt werden, Steueranschlüsse (B, C) für die zweite und die vierte Schalteinrichtung (3, 4) so geschaltet sind, um das dritte bzw. das vierte Steuersignal zu empfangen, und wobei die Anordnung so getroffen ist, daß die zweite und die vierte Schalteinrichtung zur gleichen Zeit während zweiter Perioden leitend gemacht werden, und zwar außerphasig in bezug auf die ersten Perioden, wobei das erste, zweite, dritte und vierte Steuersignale dahin tendieren, die Ausgangsleistung des Ausgangssignals auf einem im wesentlichen konstanten Pegel zu halten; und
   g) eine Einrichtung (20) zum Abtrennen der Speisespannung von den Eingangsanschlüssen in Ansprechen auf die erste und die vierte Schalteinrichtung, wenn diese zur gleichen Zeit leitend sind, oder auf die zweite und die dritte Schalteinrichtung, wenn diese zur gleichen Zeit leitend sind.

2. Schaltung nach Anspruch 1, dadurch gekennzeichnet, daß die Trenneinrichtung (20) eine Sicherung aufweist.

3. Schaltung nach einem der Ansprüche 1 oder 2, dadurch gekennzeichnet, daß jede der ersten und zweiten pulslängenmodulierten Steuereinrichtungen (12 oder 13) eine Einrichtung (32) aufweist, die auf einen abgefühlten Spannungspegel der Speisespannung zur Bestimmung der Pulslängen ihrer Steuersignale anspricht.

4. Schaltung nach Anspruch 3, dadurch gekennzeichnet, daß die auf die Spannung ansprechende Einrichtung (32) einen Analog-Digital-Wandler aufweist.

5. Schaltung nach Anspruch 4, dadurch gekennzeichnet, daß jede der ersten und zweiten pulslängenmodulierten Steuereinrichtungen (12 oder 13) einen Schwellspannungsstromkreis (31) aufweist, der so angeordnet ist, um eine Nullbezugsspannung für den AnalogDigital-Wandler (32) auf einer Höhe festzulegen, die etwas unterhalb der unteren Grenzen des Speisespannungsbereiches liegt.

6. Schaltung nach einem der Ansprüche 4 oder 5, dadurch gekennzeichnet, daß in jeder der ersten und zweiten pulslängenmodulierten Steuereinrichtungen (12 oder 13) ein Ausgang des Analog-Digital-Wandlers (32) so geschaltet ist, daß die Pulslängen-Zeitsteuereinrichtung (33) in Übereinstimmung mit einer digitalen Darstellung eines abgefühlten Speisespannungspegels gesteuert ist.

7. Schaltung nach Anspruch 6, dadurch gekennzeichnet, daß in jeder der ersten und zweiten pulslängenmodulierten Steuereinrichtungen (12 oder 13) die Pulslängen-Zeitsteuereinrichtung (33) eine Umwandlungseinrichtung zum Umwandeln der digitalen Darstellung des abgefühlten Speisespannungspegels in eine Darstellung der Pulslänge enthält, die in Übereinstimmung mit einer vorbestimmten Beziehung berechnet worden ist.

8. Schaltung nach Anspruch 7, dadurch gekennzeichnet, daß in jeder der pulslängenmodulierten Steuereinrichtungen (12 oder 13) die Umwandlungseinrichtung (33) eine Nachschlagtabelle enthält, die digitale Wörter oder Zahlen enthält, die den Pulslängen entsprechen und digitalen Wörtern gegenüberstehen, die den abgefühlten Spannungspegeln entsprechen.

9. Schaltung nach Anspruch 8, dadurch gekennzeichnet, daß jede der pulslängenmodulierten Steuereinrichtungen (12 oder 13) einen Zähler (34) aufweisen, die die digitale Zahl, die die Pulslänge darstellt, abwärts zählt, um die Pulslänge ihrer Steuersignale festzulegen.

CIRCUIT BLOCK DIAGRAM

(SEE FIG.4)
18

FSK
GENERATOR

(SEE FIG.3)
12

(SEE FIG.2)
1

FAST
FUSE 20

6
VS

16

POWER
CONTROL
UNIT

A

D

INPUT
TERMINALS

14

VOLTAGE
SENSE
POINT

ENABLE

17

CURRENT
SENSING
RESISTOR
11

O/P
TRANSFORMER
10

3

B

A

2

9

8

POWER
CONTROL
UNIT

B

C

15

VOLTAGE
SENSE
POINT

13

ENABLE

C

4

D

5

7

OVER
CURRENT
SENSING CCT.

19

OUTPUT

FIG.1

EP 0 173 445 B1

9

OUTPUT BRIDGE

FIG.2

EP 0 173 445 B1

CLOCK
—34b

$\overline{FSK}$ FSK

14(15)

VOLTAGE
SENSE
POINT

30

FIXED
VOLTAGE
DROP

31

ANALOGUE
TO
DIGITAL
CONVERTER

32

8 BITS

PROM

33

8 BITS

CK  $\overline{2D}$

$\overline{APE}$

34d

2FSK

34C

34
PRESETTABLE
DOWN
COUNTER

35

36

A(B)

D(C)

ENABLE
FROM
OVER CURRENT
SENSING CIRCUIT 19

FIG.3

EP 0 173 445 B1

EP 0 173 445 B1

FSK GENERATOR

FIG.4

DRIVE WAVEFORMS

$$V_{RMS} = \frac{2V}{\pi}\sqrt{\left(1 - \cos\frac{2\pi\gamma}{T}\right)}$$
$$\text{(OF FUNDAMENTAL WAVEFORM)}$$

FIG.5

EP 0 173 445 B1